# FASCICULE DE BREVET EUROPEEN

(11) **EP 3 060 438 B1**
(45) Date de publication et mention de la délivrance du brevet: **12.07.2017**
(21) Numéro de dépôt: 14786890.5
(22) Date de dépôt: 20.10.2014
(51) Int. Cl.: B60R 25/021

(54) **ANTIVOL POUR COLONNE DE DIRECTION DE VEHICULE AUTOMOBILE**
DIEBSTAHLSCHUTZ FÜR EINE KRAFTFAHRZEUGLENKSÄULE
ANTITHEFT FOR A MOTOR VEHICLE STEERING COLUMN

(30) Priorité: 21.10.2013 FR 1360254
(43) Date de publication de la demande: 31.08.2016
(73) Titulaire: U-Shin France, 94000 Créteil (FR)
(72) Inventeur: POGGI, Patrice, F-94046 Creteil Cedex (FR); DELLA FIORENTINA, Alix, F-94046 Creteil Cedex (FR)
(74) Mandataire: Gaillarde, Frédéric F. Ch.
(86) Numéro de dépôt international: PCT/EP2014/072461
(87) Numéro de publication internationale: WO 2015/059103

(56) Documents cités:
- EP-A1- 1 422 114
- FR-A1- 2 965 230
- US-A- 5 289 707

## Description

La présente invention concerne le domaine des verrous et antivols pour colonne de direction de véhicules automobiles.

Le moyen de verrouillage des antivols comporte un pêne monté mobile entre une position escamotée dans laquelle le pêne est maintenu à distance d'une colonne de direction et une position de saillie dans laquelle il bloque la colonne de direction du véhicule automobile. La clef conforme au verrou permet de décondamner le moyen de verrouillage du véhicule automobile.

La plupart des antivols présentent des fonctions additionnelles permettant de renforcer la sécurité du véhicule et des utilisateurs.

Ainsi, on connaît des antivols perfectionnés présentant la fonction dite « push-to-lock » dans lesquels la clé ne peut pas être extraite du verrou par un simple mouvement de retrait en position d'arrêt. Il est nécessaire d'enfoncer préalablement la clé dans le verrou pour poursuivre la rotation et extraire ensuite la clé. On prévient ainsi toute extraction intempestive ou malveillante de la clé, notamment en raison du danger que l'extraction de la clé représente lorsque le véhicule est en marche. En particulier, on évite qu'un enfant transporté sur un siège avant du véhicule puisse saisir la clé pendant le transport.

Egalement, on connait la fonction dite « anti-retour » permettant d'empêcher l'utilisateur de tourner la clé vers la position démarrage alors que le moteur thermique est déjà lancé, cf FR2965230A. On évite ainsi les risques de détérioration du démarreur ou du moteur thermique.

Ainsi dans la pratique, il existe différentes sortes d'antivols, présentant une pluralité de modes de réalisation différents permettant la mise en oeuvre de fonctions spécifiques, du fait de la multitude de fabricants présents sur ce marché.

Un des buts de la présente invention est de fabriquer un antivol au moins en partie standardisé permettant la mise en oeuvre d'une fonction différente selon le modèle de véhicule automobile.

A cet effet, la présente invention a pour objet un antivol de colonne de direction de véhicule automobile comportant :
- un moyen de verrouillage monté mobile entre une position décondamnée dans laquelle il est destiné à être disposé à distance de la colonne de direction et une position condamnée dans laquelle il est destiné à bloquer ladite colonne de direction, et
- une came destinée à être solidaire en rotation d'un rotor de verrou pour actionner le moyen de verrouillage en fonction de la position du rotor de verrou, la came comportant :
   - un profil anti-retour destiné à coopérer avec un organe d'assemblage complémentaire configuré pour empêcher la came de tourner en sens contraire après qu'elle ait atteint une première position angulaire prédéterminée, et
   - un logement de verrouillage par enfoncement destiné à recevoir une butée destinée à coopérer avec un organe d'assemblage complémentaire configuré pour empêcher la came de tourner dans un sens de rotation prédéterminé à partir d'une deuxième position angulaire prédéfinie et autoriser la rotation de la came par enfoncement préalable du rotor de verrou.

Une standardisation des antivols est ainsi obtenue, la grande majorité des composants étant standardisés. En conséquence, les lignes d'assemblage sont simplifiées de façon importante.

Selon un exemple de réalisation, le logement de verrouillage par enfoncement et le profil anti-retour sont ménagés sur un même côté de la came.

Selon un exemple de réalisation, le logement de verrouillage par enfoncement présente une ouverture s'étendant radialement.

Selon un exemple de réalisation, le profil anti-retour comporte un profil aller et un profil retour, le profil retour présentant un relief anti-retour. Les profils aller et retour présentent par exemple des portions intermédiaires décalées axialement le long de l'axe de rotation de la came.

Selon une première configuration de l'antivol, l'organe de l'assemblage complémentaire comporte un élément de commande rappelé élastiquement contre le profil anti-retour pour empêcher la came de tourner en sens contraire après qu'elle ait atteint la première position angulaire prédéterminée.

Par exemple, le profil anti-retour coopère avec un organe de l'assemblage complémentaire pour empêcher la came de tourner en sens contraire après qu'elle ait atteint une position intermédiaire depuis la position démarrage, le profil anti-retour étant ménagé dans la came pour coopérer avec l'organe de l'assemblage complémentaire entre les positions neutre stop et démarrage. On évite ainsi les risques éventuels de détérioration du démarreur ou du moteur thermique lorsque le conducteur provoque une nouvelle alimentation du moteur électrique du démarreur alors que le moteur thermique est déjà lancé.

Selon un exemple de réalisation, l'élément de commande comporte un organe élastique et un doigt de commande, l'organe élastique étant configuré pour appliquer deux forces perpendiculaires au doigt de commande pour créer un contact permanent entre l'élément de commande et le profil anti-retour. On améliore ainsi la fiabilité du contact entre l'élément de commande et le profil anti-retour.

Selon une deuxième configuration de l'antivol, l'antivol comporte un élément élastique destiné à être agencé à l'extrémité arrière du rotor de verrou et configuré pour solliciter axialement le rotor de verrou en poussée.

La butée est par exemple élastiquement sollicitée à l'encontre d'un épaulement du rotor de verrou.

Par exemple, la butée comporte une plaquette et un élément élastique additionnel interposé entre le fond du logement de verrouillage par enfoncement et la plaquette.

L'organe de l'assemblage complémentaire présente par exemple un ergot ayant une portion conformée en rampe d'enfoncement et une face radiale consécutive à la portion conformée en rampe d'enfoncement destinée à empêcher la came de tourner dans un sens de rotation prédéterminé à partir de la deuxième position angulaire prédéfinie.

Selon un exemple de réalisation, la butée reçue dans le logement de verrouillage par enfoncement coopère avec l'organe de l'assemblage complémentaire pour empêcher la came de tourner dans le sens de rotation antihoraire à partir d'une position intermédiaire. Par ce moyen, la clé ne peut pas être extraite du rotor de verrou par un simple mouvement de retrait. Il est nécessaire d'enfoncer préalablement la clé dans le rotor de verrou pour poursuivre la rotation et pouvoir ensuite extraire la clé. On prévient ainsi toute extraction intempestive ou malveillante de la clé, notamment en raison du danger que l'extraction de la clé représente lorsque le véhicule est en marche.

D'autres avantages et caractéristiques apparaîtront à la lecture de la description de l'invention, ainsi que sur les figures annexées qui représentent un exemple de réalisation non limitatif de l'invention et sur lesquelles :
- la figure 1 représente une vue en perspective d'un antivol de colonne de direction de véhicule automobile,
- la figure 2 représente une vue éclatée d'éléments de l'antivol de la figure 1,
- la figure 3 représente une vue en perspective et de côté de la came de l'antivol de la figure 1,
- la figure 4 représente une vue de dessus de la came de la figure 3,
- la figure 5 représente une vue en perspective d'éléments d'un antivol à l'état assemblé fabriqué pour assurer la fonction « anti-retour », ainsi qu'une vue en éclaté de l'organe de l'assemblage complémentaire dudit antivol,
- la figure 6 représente une vue en éclaté d'éléments d'un antivol fabriqué pour assurer la fonction « push-to-lock »,
- la figure 7 montre une vue agrandie à l'état assemblé de l'antivol de la figure 6, la came étant représentée par transparence,
- la figure 8 représente une autre vue agrandie d'éléments de l'antivol de la figure 6, avec la came représentée par transparence en position neutre stop,
- la figure 9 représente une vue similaire à la figure 8, la came étant en cours de rotation,
- la figure 10 représente une vue similaire à la figure 9, la came continuant de tourner dans le même sens de rotation,
- la figure 11 représente une vue similaire à la figure 10, la came ayant atteint la position intermédiaire accessoires,
- la figure 12 représente une vue similaire à la figure 11, la came ayant pivoté dans le sens de rotation contraire et étant en butée,
- la figure 13 représente une vue d'éléments de l'antivol de la figure 6, illustrant le rotor de verrou en cours d'enfoncement, et
- la figure 14 représente une vue en agrandie des éléments de la figure 13, avec le rotor de verrou enfoncé.

Sur ces figures, les éléments identiques portent les mêmes numéros de référence.

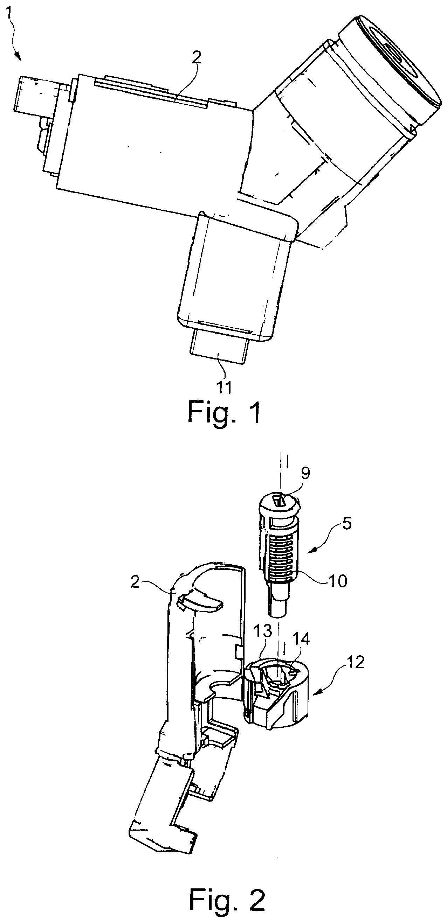

La figure 1 illustre un exemple d'antivol 1, destiné à être monté dans un véhicule automobile pour en sécuriser la direction.

L'antivol 1 comporte un corps d'antivol 2 en partie représenté sur la figure 2, et à l'intérieur duquel un verrou est destiné à être inséré et solidarisé.

Le verrou comporte un rotor de verrou 5 susceptible d'être mobile en rotation axiale autour d'un axe de rotation I-I par entraînement en rotation d'une clé pour commander un moyen de verrouillage de l'antivol 1.

Le rotor de verrou 5 présente une entrée de clé 9 ménagée à l'extrémité avant (ou tête). Il est entendu que, dans l'ensemble de ce texte, le terme rotor de verrou désigne très généralement tout sous-ensemble comprenant un corps de rotor à travers lequel sont ménagés des fentes radiales 10 à même de recevoir des paillettes qui sont montées mobiles en translation radiale et qui sont couplées à des ressorts de rappel les entraînant en permanence dans des positions saillantes par rapport au corps du rotor.

Selon un exemple de réalisation, la rotation de la clé est susceptible d'entraîner la rotation du rotor de verrou 5 dans une première position angulaire extrême neutre, dite position neutre, comme la position « stop », deux positions angulaires intermédiaires, dites positions « marche » et « accessoires » et une deuxième position angulaire extrême, opposée à la première position angulaire extrême neutre, dite position « démarrage ». Les positions neutre STOP, intermédiaires ACC, MARCHE et démarrage DEM se succèdent lorsque le rotor de verrou 5 est déplacé de la position neutre STOP vers la position démarrage DEM. Après son passage par la position démarrage DEM, le rotor de verrou 5 est élastiquement ramené par un ressort de rappel vers sa position intermédiaire MARCHE.

Le moyen de verrouillage comporte un pêne 11 monté mobile entre une position escamotée dans laquelle le pêne 11 est maintenu à distance d'une colonne de direction (non représentée) et une position de saillie (figure 1) dans laquelle il bloque la colonne de direction du véhicule automobile. Le pêne 11 est sollicité en poussé en position de saillie par un ressort de pêne.

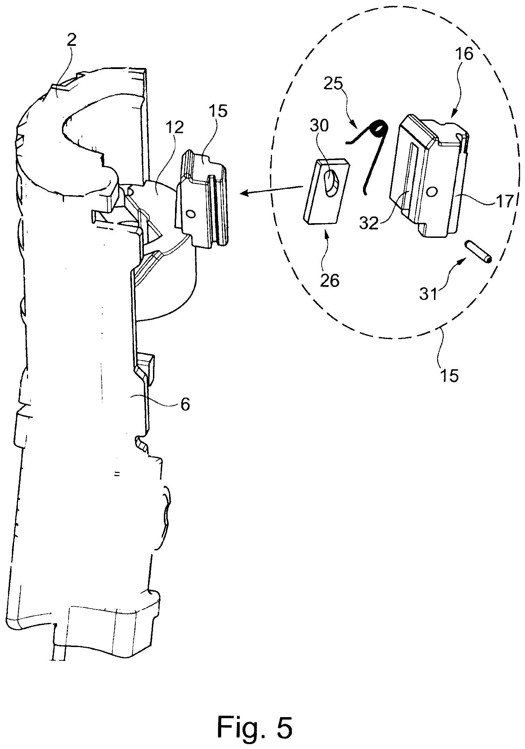

L'antivol comporte également une came 12, solidaire en rotation du rotor de verrou 5, et couplée au pêne 11, par exemple par le biais d'une tirette 6 (figure 5), de sorte que la rotation du rotor de verrou 5 permette de contrôler la translation du pêne 11.

Le pêne 11 est généralement en position de saillie dans la colonne de direction lorsque le rotor de verrou 5 est en position neutre STOP et la clef retirée du rotor de verrou 5, le pêne 11 étant maintenu rentré, en position escamotée, dans les autres positions angulaires du rotor de verrou 5. Ainsi, la came 12 permet d'actionner le moyen de verrouillage en fonction de la position du rotor de verrou 5.

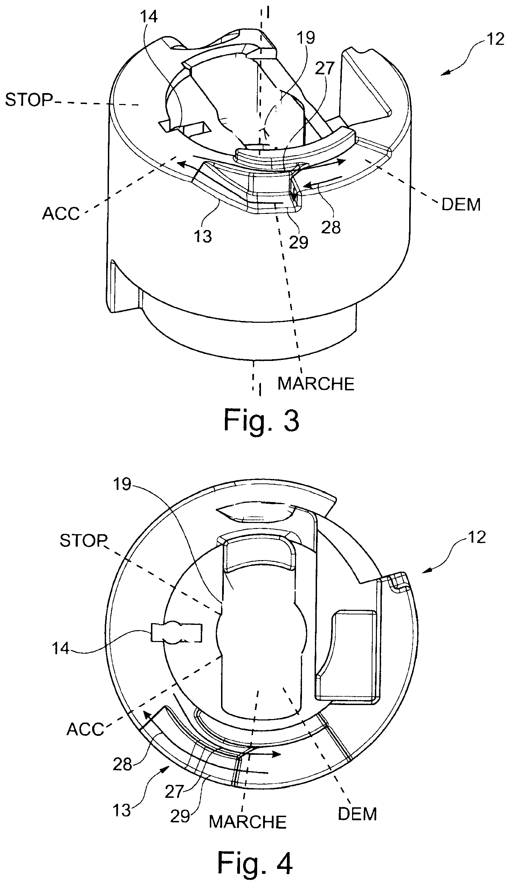

Mieux visible sur les figures 3 et 4, la came 12 comporte un profil anti-retour 13 et un logement de verrouillage par enfoncement 14. En outre, l'antivol 1 comporte un organe d'un assemblage complémentaire 15.

Selon la fonction qui doit être assurée par l'antivol, l'organe d'assemblage complémentaire 15 est soit configuré pour coopérer avec le profil anti-retour 13, soit configuré pour coopérer avec le logement de verrouillage par enfoncement 14, mais il ne peut pas être configuré pour assurer ces deux fonctions distinctes dans un même antivol.

Ainsi selon une première configuration de l'antivol, l'organe d'assemblage complémentaire 15 est configuré pour coopérer avec le profil anti-retour 13 pour empêcher la came 12 de tourner en sens contraire après qu'elle ait atteint une première position angulaire prédéterminée et autoriser la rotation de la came 12 lorsqu'elle passe d'abord par une autre position angulaire prédéterminée.

Par exemple, le profil anti-retour 13 coopère avec l'organe de l'assemblage complémentaire 15 pour empêcher la came 12 de tourner en sens contraire après qu'elle ait atteint la position intermédiaire MARCHE depuis la position démarrage DEM et autoriser la rotation de la came 12 lorsqu'elle repasse d'abord par la position neutre STOP. Le profil anti-retour 13 est ainsi ménagé dans la came 12 pour coopérer avec l'organe de l'assemblage complémentaire 15 entre les positions neutre STOP et démarrage DEM.

Selon une deuxième configuration de l'antivol, le logement de verrouillage par enfoncement 14 reçoit une butée 20, 21 destinée à coopérer avec l'organe d'assemblage complémentaire 15 configuré pour empêcher la came 12 de tourner dans un sens de rotation prédéterminé à partir d'une deuxième position angulaire prédéfinie et autoriser la rotation de la came 12 par enfoncement préalable du rotor de verrou 5.

Par exemple, la butée 20, 21 reçue dans le logement de verrouillage par enfoncement 14 coopère avec l'organe de l'assemblage complémentaire 15 pour empêcher la came 12 de tourner dans le sens de rotation antihoraire à partir d'une position intermédiaire, telle que la position intermédiaires accessoires ACC.

Le logement de verrouillage par enfoncement 14 est ménagé dans une extrémité axiale de la came 12. Le logement de verrouillage par enfoncement 14 est par exemple ménagé du même côté de la came 12 que le profil anti-retour 13 (figure 4). Le logement de verrouillage par enfoncement 14 et le profil anti-retour 13 sont par exemple agencé plus près de la bordure que du centre de la came 12 pour faciliter la coopération avec l'organe complémentaire 15.

Le logement de verrouillage par enfoncement 14 présente par exemple une forme générale parallélépipédique, dont l'ouverture est allongée et s'étend radialement.

Le profil anti-retour 13 s'étend dans la périphérie de la came 12. Il comporte par exemple un profil aller 27 (voir le tracé fléché sur la figure 4) et un profil retour 28 (voir le tracé fléché sur la figure 4) distinct. Les profils aller 27 et retour 28 présentent des points de départ et d'arrivée communs et des portions intermédiaires décalées axialement le long de l'axe de rotation I-I de la came 12. Dans sa portion décalée, le profil retour 28 présente un relief anti-retour 29, formant par exemple un creux.

L'organe d'assemblage complémentaire 15 comporte un support 16 fixé au corps d'antivol 2 de l'antivol par un moyen de fixation 17 tel qu'une rainure coulissante dans une rainure complémentaire du corps d'antivol 2.

Dans la première configuration de l'antivol représenté sur la figure 5, dans laquelle l'antivol est fabriqué pour assurer la fonction « anti-retour », l'organe complémentaire 15 comporte un élément de commande rappelé élastiquement contre le profil anti-retour 13.

Plus précisément, comme représenté sur la figure 5, l'élément de commande comporte un organe élastique 25 et un doigt de commande 26, tel qu'une plaquette, reçus dans un logement de commande 32 du support 16 de l'organe d'assemblage complémentaire 15.

Selon un exemple de réalisation, l'organe élastique 25 est configuré pour appliquer deux forces perpendiculaires au doigt de commande 26 pour créer un contact permanent entre l'élément de commande et le profil anti-retour 13. L'organe élastique 25 comporte par exemple au moins un ressort en épingle. On améliore ainsi la fiabilité du contact entre l'élément de commande et le profil anti-retour 13.

Selon un exemple de réalisation, le doigt de commande 26 présente un moyen de fixation au support 16 autorisant le déplacement relatif entre le doigt de commande 26 et le support 16. Par exemple, le moyen de fixation est formé par un trou oblong 30 associé à une goupille 31 traversant le trou oblong 30, le trou oblong 30 étant par exemple ménagé dans le doigt de commande 26.

En fonctionnement, en considérant que le verrou est initialement en position neutre STOP, la rotation de la clé entraîne la rotation du rotor de verrou 5 et la came 12 dans le sens de rotation horaire. Le doigt de commande 26 est alors sollicité contre le profil aller 27 jusqu'à la position intermédiaire MARCHE. Lorsque l'utilisateur continue de tourner la clé, la came 12 tourne jusqu'à la position démarrage DEM, rejoignant le profil retour 28.

Après la position démarrage DEM, la came 12 est élastiquement rappelée en position intermédiaire MARCHE (sens de rotation antihoraire). Le doigt de commande 26 bascule alors dans le creux du relief anti-retour 29 de sorte que la rotation en sens contraire (sens de rotation horaire) de la came 12 vers la position démarrage DEM est bloquée.

Ainsi, le conducteur ne peut pas tourner la clé en position démarrage DEM sans repasser d'abord par la position neutre STOP. Pour cela, il doit continuer de tourner la clé dans le sens de rotation antihoraire de sorte que le doigt de commande 26 sollicité contre le profil retour 28 soit guidé par le profil anti-retour 13 jusqu'au départ du profil aller 27.

On évite ainsi les risques éventuels de détérioration du démarreur ou du moteur thermique lorsque le conducteur provoque une nouvelle alimentation du moteur électrique du démarreur alors que le moteur thermique est déjà lancé.

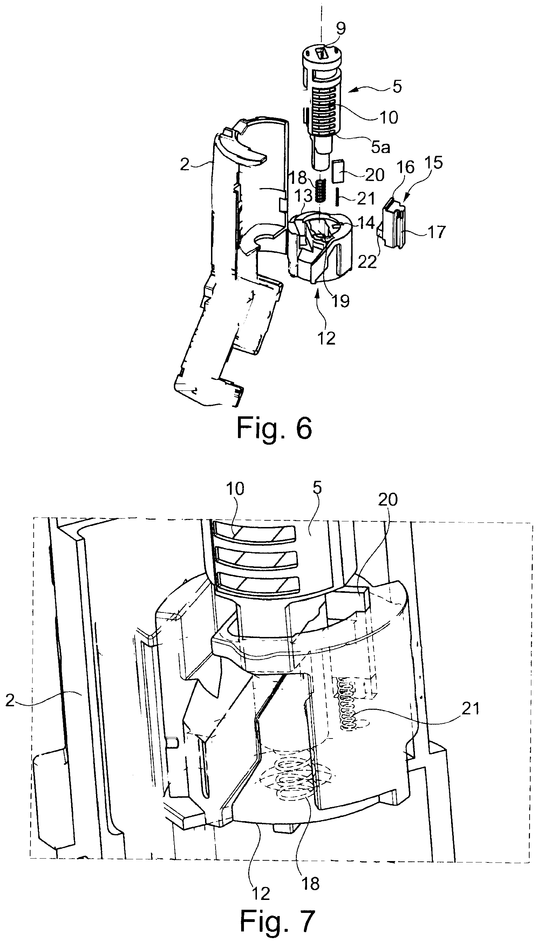

Nous allons maintenant décrire les figures 6 à 14 qui illustrent un antivol fabriqué pour assurer la fonction « push-to-lock ».

Dans cette configuration, l'antivol comporte un élément élastique 18 agencé à l'extrémité arrière (ou queue) du rotor de verrou 5 et configuré pour solliciter axialement le rotor de verrou 5 en poussée. L'élément élastique 18 est par exemple un ressort de poussée. Il est par exemple interposé entre la came 12 et la queue du rotor de verrou 5 et est reçu dans un logement central 19 de la came 12 qui reçoit également la queue du rotor de verrou 5. L'élément élastique 18 est monté coaxialement entre la came 12 et le rotor de verrou 5. Le rotor de verrou 5 est ainsi en liaison glissière avec la came 12, c'est-à-dire que le rotor de verrou 5 est lié en rotation avec la came 12 mais pas en translation, l'élément élastique 18 repoussant le rotor de verrou 5 en position non enfoncée.

L'antivol comporte également une butée 20, 21 reçue dans le logement de verrouillage par enfoncement 14, par exemple élastiquement sollicitée à l'encontre d'un épaulement 5a du rotor de verrou 5. La butée 20, 21 coopère avec l'organe d'assemblage complémentaire 15 pour empêcher la came 12 de tourner dans un sens de rotation prédéterminé à partir d'une deuxième position angulaire prédéfinie et autoriser la rotation de la came 12 par enfoncement préalable du rotor de verrou 5.

Plus précisément, la butée comporte par exemple une plaquette 20, par exemple métallique, et un élément élastique additionnel 21 interposé entre le fond du logement de verrouillage par enfoncement 14 et la plaquette 20. La plaquette 20 est ainsi en liaison glissière avec la came 12, c'est-à-dire que la plaquette 20 est entraînée en rotation par la came 12 mais pas en translation, l'élément élastique additionnel 21 repoussant la plaquette 20 en saillie vers l'épaulement 5a du rotor de verrou 5 qui limite la translation axiale en saillie de la butée 20, 21 (figure 7).

Dans cette seconde configuration de l'antivol, l'organe d'assemblage complémentaire 15 présente un ergot 22, par exemple formé d'une seule pièce avec le support 16, et s'étendant radialement.

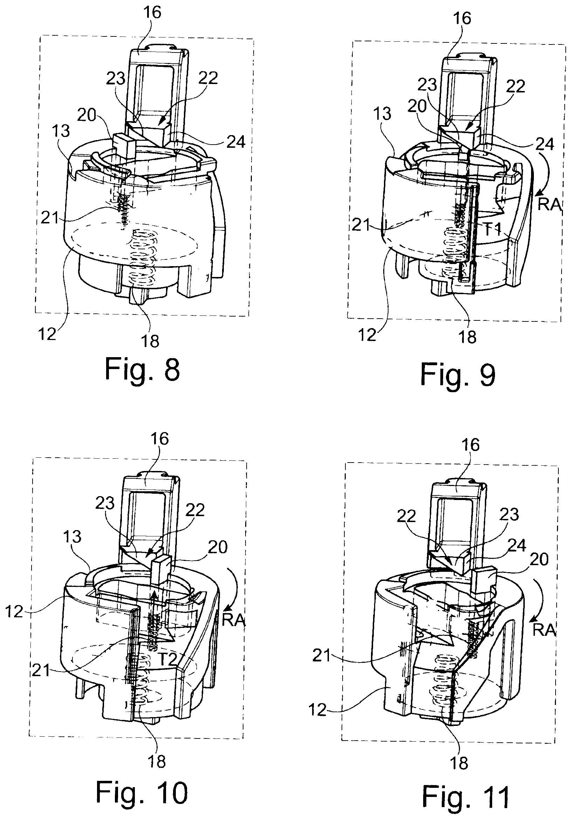

Selon un exemple de réalisation visible sur les figures 8 à 13, l'ergot 22 présente une portion conformée en rampe d'enfoncement 23 de sorte que lors de la rotation horaire du rotor de verrou 5, la portion conformée en rampe d'enfoncement 23 enfonce progressivement la butée 20, 21 dans le logement de verrouillage par enfoncement 14.

L'ergot 22 comporte également une face radiale 24 (figure 8) pour bloquer la rotation de la came 12 par coopération avec la butée 20, 21, lors de la rotation de la came 12 dans le sens de rotation prédéterminé à partir de la deuxième position angulaire prédéfinie. La face radiale 24 est agencée consécutivement à la portion conformée en rampe d'enfoncement 23.

En fonctionnement, en supposant en référence à la figure 8, que le véhicule est à l'arrêt et que le conducteur introduit la clé dans le rotor de verrou 5 pour mettre en marche le véhicule, la came 12 est alors dans la position angulaire neutre STOP. C'est seulement dans cette configuration que la clé peut être introduite dans le rotor de verrou 5 ou en être extraite suivant l'axe de rotation I-I. Dès que le rotor de verrou 5 quitte cette position, l'extraction de la clé est impossible.

Puis, l'utilisateur commence à tourner la clé dans le sens de rotation horaire, faisant tourner la came 12 selon la flèche RA sur la figure 9.

La butée 20, 21 entre alors en contact avec le haut de la portion conformée en rampe d'enfoncement 23 de l'ergot 22 qui enfonce progressivement la plaquette 20 axialement dans le logement de verrouillage par enfoncement 14 à l'encontre de son rappel élastique (flèche T1 sur la figure 9).

Une fois enfoncée dans le logement de verrouillage par enfoncement 14, la plaquette 20 ne fait plus obstacle à l'organe de l'assemblage complémentaire 15 de sorte que la came 12 peut poursuivre sa trajectoire en rotation dans le sens horaire.

Une fois que la butée 20, 21 a dépassé l'ergot 22, l'élément élastique additionnel 21 rappelle la plaquette 20 en position de saillie (flèche T2 ; figure 10).

Puis, la rotation de la came 12 se poursuit jusqu'à la position intermédiaire accessoires ACC (figure 11).

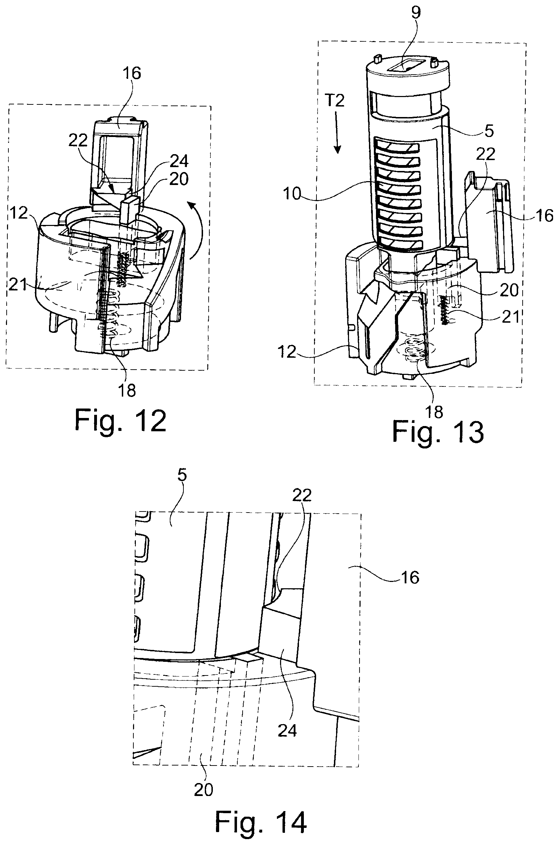

A partir de la position intermédiaire accessoires ACC, lorsque le conducteur tourne la clé en sens inverse (sens de rotation antihoraire), la rotation de la came 12 est interdite par la mise en butée de la plaquette 20 contre la face radiale 24 de l'ergot 22 (flèche AR ; figure 12). Il n'est donc pas possible de faire tourner le rotor de verrou 5 à partir de la position intermédiaire accessoires ACC pour lui faire regagner la position neutre STOP et ôter la clé.

Dans cette position de butée, le conducteur doit enfoncer le rotor de verrou 5 dans le corps d'antivol 2 (flèche T2 sur la figure 13), pour repousser la butée 20, 21 dans le logement de verrouillage par enfoncement 14, permettant le franchissement de l'ergot 22 par la plaquette 20 (figure 14).

Une fois l'ergot 22 franchi, le conducteur peut relâcher la pression sur le rotor de verrou 5 qui reprend sa position initiale non enfoncée sous l'effet de l'élément élastique 18. Le conducteur peut alors continuer de tourner le rotor de verrou 5 pour atteindre la position neutre STOP et extraire la clé.

Par ce moyen, la clé ne peut pas être extraite du rotor de verrou 5 par un simple mouvement de retrait en position neutre STOP. Il est nécessaire d'enfoncer préalablement la clé dans le rotor de verrou 5 pour poursuivre la rotation et pouvoir ensuite extraire la clé. On prévient ainsi toute extraction intempestive ou malveillante de la clé, notamment en raison du danger que l'extraction de la clé représente lorsque le véhicule est en marche.

On peut donc fabriquer un antivol permettant la mise en oeuvre d'une fonction différente selon le modèle de véhicule automobile.

Une standardisation des antivols est ainsi obtenue, la came 12 étant standardisée pour convenir soit à la fonction dite « push-to-lock » pour laquelle la clé ne peut pas être extraite du verrou par un simple mouvement de retrait en position d'arrêt, soit à la fonction dite « anti-retour » permettant d'empêcher l'utilisateur de tourner la clé vers la position démarrage alors que le moteur thermique est déjà lancé. En conséquence, les lignes d'assemblage sont simplifiées de façon importante.

## Revendications

1. Antivol de colonne de direction de véhicule automobile comportant :
- un moyen de verrouillage monté mobile entre une position décondamnée dans laquelle il est destiné à être disposé à distance de la colonne de direction et une position condamnée dans laquelle il est destiné à bloquer ladite colonne de direction, et
- une came (12) destinée à être solidaire en rotation d'un rotor de verrou (5) pour actionner le moyen de verrouillage en fonction de la position du rotor de verrou (5), la came comportant :
- un profil anti-retour (13) destiné à coopérer avec un organe d'assemblage complémentaire (15) configuré pour empêcher la came (12) de tourner en sens contraire après qu'elle ait atteint une première position angulaire prédéterminée, et
- un logement de verrouillage par enfoncement (14) destiné à recevoir une butée (20, 21) destinée à coopérer avec un organe d'assemblage complémentaire (15) configuré pour empêcher la came (12) de tourner dans un sens de rotation prédéterminé à partir d'une deuxième position angulaire prédéfinie et autoriser la rotation de la came (12) par enfoncement préalable du rotor de verrou (5).

2. Antivol selon la revendication 1, **caractérisé en ce que** le logement de verrouillage par enfoncement (14) et le profil anti-retour (13) sont ménagés sur un même côté de la came (12).

3. Antivol selon l'une des revendications précédentes, **caractérisé en ce que** le logement de verrouillage par enfoncement (14) présente une ouverture s'étendant radialement.

4. Antivol selon l'une des revendications précédentes, **caractérisé en ce que** le profil anti-retour (13) comporte un profil aller (27) et un profil retour (28), le profil retour (28) présentant un relief anti-retour (29).

5. Antivol selon la revendication précédente, **caractérisé en ce que** les profils aller (27) et retour (28) présentent des portions intermédiaires décalées axialement le long de l'axe de rotation (I-I) de la came (12).

6. Antivol selon l'une des revendications précédentes, **caractérisé en ce que** la butée (20, 21) reçue dans le logement de verrouillage par enfoncement (14) coopère avec l'organe de l'assemblage complémentaire (15) pour empêcher la came (12) de tourner dans le sens de rotation antihoraire à partir d'une position intermédiaire (ACC).

7. Antivol selon l'une des revendications précédentes, **caractérisé en ce qu'**il comporte un élément élastique (18) destiné à être agencé à l'extrémité arrière du rotor de verrou (5) et configuré pour solliciter axialement le rotor de verrou (5) en poussée.

8. Antivol selon la revendication précédente, **caractérisé en ce que** la butée (20, 21) est élastiquement sollicitée à l'encontre d'un épaulement (5a) du rotor de verrou (5).

9. Antivol selon la revendication précédente, **caractérisé en ce que** la butée (20, 21) comporte une plaquette (20) et un élément élastique additionnel (21) interposé entre le fond du logement de verrouillage par enfoncement (14) et la plaquette (20).

10. Antivol selon l'une des revendications 7 à 9, **caractérisé en ce que** l'organe de l'assemblage complémentaire (15) présente un ergot (22) ayant une portion conformée en rampe d'enfoncement (23) et une face radiale (24) consécutive à la portion conformée en rampe d'enfoncement (23) destinée à empêcher la came (12) de tourner dans un sens de rotation prédéterminé à partir de la deuxième position angulaire prédéfinie.

11. Antivol selon l'une des revendications précédentes, **caractérisé en ce que** le profil anti-retour (13) coopère avec l'organe de l'assemblage complémentaire (15) pour empêcher la came (12) de tourner en sens contraire après qu'elle ait atteint une position intermédiaire (MARCHE) depuis la position démarrage (DEM), le profil anti-retour (13) étant ménagé dans la came (12) pour coopérer avec l'organe de l'assemblage complémentaire (15) entre les positions neutre stop (STOP) et démarrage (DEM).

12. Antivol selon l'une des revendications précédentes, **caractérisé en ce que** l'organe de l'assemblage complémentaire (15) comporte un élément de commande rappelé élastiquement contre le profil anti-retour (13) pour empêcher la came (12) de tourner en sens contraire après qu'elle ait atteint la première position angulaire prédéterminée.

13. Antivol selon la revendication précédente, **caractérisé en ce que** l'élément de commande comporte un organe élastique (25) et un doigt de commande (26), l'organe élastique (25) étant configuré pour appliquer deux forces perpendiculaires au doigt de commande (26) pour créer un contact permanent entre l'élément de commande et le profil anti-retour (13).

## Patentansprüche

1. Diebstahlsicherung für eine Lenksäule eines Kraftfahrzeugs, Folgendes umfassend:
- ein Verriegelungsmittel, das mobil zwischen einer entriegelten Position, in der es dazu bestimmt ist, auf Abstand zur Lenksäule angeordnet zu sein, und einer verriegelten Position montiert ist, in der es dazu bestimmt ist, die besagte Lenksäule zu blockieren, und
- einen Nocken (12), der dazu bestimmt ist, drehfest mit einem Riegelrotor (5) verbunden zu sein, um das Verriegelungsmittel in Abhängigkeit von der Position des Riegelrotors (5) zu betätigen, wobei der Nocken Folgendes umfasst:
- ein Rückschlagprofil (13), das dazu bestimmt ist, mit einem ergänzenden Befestigungsorgan (15) zusammenzuwirken, das konfiguriert ist, um den Nocken (12) daran zu hindern, sich in die entgegengesetzte Richtung zu drehen, nachdem dieser eine erste vorbestimmte Winkelposition erreicht hat, und
- eine Verriegelungsaufnahme durch Eindrücken (14), die dazu bestimmt ist, einen Anschlag (20, 21) aufzunehmen, der dazu bestimmt ist, mit einem ergänzenden Befestigungsorgan (15) zusammenzuwirken, das konfiguriert ist, um den Nocken (12) daran zu hindern, sich aus einer zweiten vordefinierten Winkelposition in eine vorbestimmte Drehrichtung zu drehen, und die Drehung des Nockens (12) durch vorheriges Eindrücken des Riegelrotors (5) freizugeben.

2. Diebstahlsicherung nach Anspruch 1, **dadurch gekennzeichnet, dass** die Verriegelungsaufnahme durch Eindrücken (14) und das Rückschlagprofil (13) auf einer selben Seite des Nockens (12) angeordnet sind.

3. Diebstahlsicherung nach einem der vorhergehenden Ansprüche, **dadurch gekennzeichnet, dass** die Verriegelungsaufnahme durch Eindrücken (14) eine Öffnung aufweist, die sich radial erstreckt.

4. Diebstahlsicherung nach einem der vorhergehenden Ansprüche, **dadurch gekennzeichnet, dass** das Rückschlagprofil (13) ein Profil für den Hinweg (27) und ein Profil für den Herweg (28) umfasst, wobei das Profil für den Herweg (28) ein Rückschlagrelief (29) aufweist.

5. Diebstahlsicherung nach dem vorhergehenden Anspruch, **dadurch gekennzeichnet, dass** die Profile für den Hinweg (27) und für den Herweg (28) Zwischenabschnitte umfassen, die axial entlang der Drehachse (I-I) des Nockens (12) versetzt sind.

6. Diebstahlsicherung nach einem der vorhergehenden Ansprüche, **dadurch gekennzeichnet, dass** der Anschlag (20, 21), der in der Verriegelungsaufnahme durch Eindrücken (14) aufgenommen wird, mit dem ergänzenden Befestigungsorgan (15) zusammenwirkt, um den Nocken (12) daran zu hindern, sich aus einer Zwischenposition (ACC) in die Drehrichtung gegen den Uhrzeigersinn zu drehen.

7. Diebstahlsicherung nach einem der vorhergehenden Ansprüche, **dadurch gekennzeichnet, dass** sie ein elastisches Element (18) umfasst, das dazu bestimmt ist, am hinteren Ende des Riegelrotors (5) angeordnet zu werden, und konfiguriert ist, um den Riegelrotor (5) axial anzuschieben.

8. Diebstahlsicherung nach dem vorhergehenden Anspruch, **dadurch gekennzeichnet, dass** der Anschlag (20, 21) elastisch gegen einen Ansatz (5a) des Riegelrotors (5) gedrückt wird.

9. Diebstahlsicherung nach dem vorhergehenden Anspruch, **dadurch gekennzeichnet, dass** der Anschlag (20, 21) eine Platte (20) und ein zusätzliches elastisches Element (21) umfasst, das zwischen dem Boden der Verriegelungsaufnahme durch Eindrücken (14) und der Platte (20) eingesetzt ist.

10. Diebstahlsicherung nach einem der Ansprüche 7 bis 9, **dadurch gekennzeichnet, dass** das ergänzende Befestigungsorgan (15) einen Zapfen (22) aufweist, der einen Abschnitt hat, der als Eindrückrampe (23) ausgeformt ist, und eine radiale Fläche (24) im Anschluss an den Abschnitt, der als Eindrückrampe (23) ausgeformt ist, die dazu bestimmt ist, den Nocken (12) daran zu hindern, sich aus einer zweiten vordefinierten Winkelposition in eine vorbestimmte Drehrichtung zu drehen.

11. Diebstahlsicherung nach einem der vorhergehenden Ansprüche, **dadurch gekennzeichnet, dass** das Rückschlagprofil (13) mit dem ergänzenden Befestigungsorgan (15) zusammenwirkt, um den Nocken (12) daran zu hindern, sich in die entgegengesetzte Richtung zu drehen, nachdem er aus der Startposition (DEM) heraus eine Zwischenposition (MARCHE) erreicht hat, wobei das Rückschlagprofil (13) im Nocken (12) angeordnet ist, um mit dem ergänzenden Befestigungsorgan (15) zwischen den Positionen neutral Stopp (STOP) und Start (DEM) zusammenzuwirken.

12. Diebstahlsicherung nach einem der vorhergehenden Ansprüche, **dadurch gekennzeichnet, dass** das ergänzende Befestigungsorgan (15) ein Steuerungselement umfasst, das elastisch zum Rückschlagprofil (13) zurückgeholt wird, um den Nocken (12) daran zu hindern, sich in die entgegengesetzte Richtung zu drehen, nachdem er die erste vorbestimmte Winkelposition erreicht hat.

13. Diebstahlsicherung nach dem vorhergehenden Anspruch, **dadurch gekennzeichnet, dass** das Steuerungselement ein elastisches Organ (25) und einen Steuerungsstift (26) umfasst, wobei das elastische Organ (25) konfiguriert ist, um zwei senkrechte Kräfte am Steuerungsstift (26) anzulegen, um einen permanenten Kontakt zwischen dem Steuerungselement und dem Rückschlagprofil (13) zu erzeugen.

## Claims

1. An anti-theft device for a steering column of a motor vehicle comprising:
- a locking means movably mounted between an unlocked position in which it is intended to be disposed at a distance from the steering column and a locked position in which it is intended to block said steering column, and
- a cam (12) intended to be secured in rotation to a lock rotor (5) to actuate the locking means depending on the position of the lock rotor (5),
the cam comprising:
- a non-return profile (13) intended to cooperate with a complementary assembly member (15) configured to prevent the cam (12) from rotating in opposite direction after it has reached a first predetermined angular position, and
- a push-locking recess (14) intended to receive an abutment (20, 21) intended to cooperate with a complementary assembly member (15) configured to prevent the cam (12) from rotating in a predetermined direction of rotation from a second predefined angular position and authorize the rotation of the cam (12) by prior depression of the lock rotor (5).

2. The anti-theft device according to claim 1, **characterized in that** the push-locking recess (14) and the non-return profile (13) are formed on the same side of the cam (12).

3. The anti-theft device according to any of the preceding claims, **characterized in that** the push-locking recess (14) has a radially extending opening.

4. The anti-theft device according to any of the preceding claims, **characterized in that** the non-return profile (13) includes an outward profile (27) and a return profile (28), the return profile (28) having a non-return relief (29).

5. The anti-theft device according to the preceding claim, **characterized in that** the outward (27) and return (28) profiles have intermediate portions offset axially along the axis of rotation (I-I) of the cam (12).

6. The anti-theft device according to any of the preceding claims, **characterized in that** the abutment (20, 21) received in the push-locking recess (14) cooperates with the complementary assembly member (15) to prevent the cam (12) from rotating in the counterclockwise direction of rotation from an intermediate position (ACC).

7. The anti-theft device according to any of the preceding claims, **characterized in that** it includes an elastic element (18) intended to be arranged at the rear end of the lock rotor (5) and configured to axially thrust-biase the lock rotor (5).

8. The anti-theft device according to the preceding claim, **characterized in that** the abutment (20, 21) is elastically biased against a shoulder (5a) of the lock rotor (5).

9. The anti-theft device according to the preceding claim, **characterized in that** the abutment (20, 21) includes a plate (20) and an additional elastic element (21) interposed between the bottom of the push-locking recess (14) and the plate (20).

10. The anti-theft device according to any of claims 7 to 9, **characterized in that** the complementary assembly member (15) has a lug (22) having a portion shaped as a depression ramp (23) and a radial face (24) consecutive to the portion shaped as a depression ramp (23) intended to prevent the cam (12) from rotating in a predetermined direction of rotation from the second predefined angular position.

11. The anti-theft device according to any of the preceding claims, **characterized in that** the non-return profile (13) cooperates with the complementary assembly member (15) to prevent the cam (12) from rotating in the opposite direction after it has reached an intermediate position (ON) from the start position (START), the non-return profile (13) being formed in the cam (12) to cooperate with the complementary assembly member (15) between the neutral stop (STOP) and start (START) positions.

12. The anti-theft device according to any of the preceding claims, **characterized in that** the complementary assembly member (15) includes a control element elastically returned against the non-return profile (13) to prevent the cam (12) from rotating in the opposite direction after it has reached the first predetermined angular position.

13. The anti-theft device according to the preceding claim, **characterized in that** the control element includes an elastic member (25) and a control finger (26), the elastic member (25) being configured to apply two forces perpendicular to the control finger (26) to create permanent contact between the control element and the non-return profile (13).
